**Europäisches Patentamt**

**European Patent Office**

**Office européen des brevets**

(19)

(11) Veröffentlichungsnummer: **0 188 853**
A1

(12) **EUROPÄISCHE PATENTANMELDUNG**

(21) Anmeldenummer: **85202152.6**

(22) Anmeldetag: **31.12.85**

(51) Int. Cl.⁴: **F 23 G 1/00,** B 01 D 46/12

---

(30) Priorität: **04.01.85 NL 8500020**

(43) Veröffentlichungstag der Anmeldung: **30.07.86**
**Patentblatt 86/31**

(84) Benannte Vertragsstaaten: **AT BE CH DE FR GB IT LI NL SE**

(71) Anmelder: **A C S Milieutechniek bv, Wolvenkoog 5, NL-1800 AL Alkmaar (NL)**

(72) Erfinder: **Kleinschmidt, Leendert Antonius, Lepelaar 9, NL-1721 DA Broek op Langedijk (NL)**

(74) Vertreter: **Koomen, Jan, Ir., Kennemerstraatweg 35, NL-1814 GB Alkmaar (NL)**

---

(54) **Verfahren und Vorrichtung zum Reinigen der aus eienem Kremationsofen herkunftigen Luft.**

(57) Verfahren und Vorrichtung zum Reinigen von aus einem Kremationsofen abkunftigen Luft, wobei diese Luft durch einen von einem Gehäuse umschlossenen Durchflußkanal geführt wird, in den eine Kombination von hintereinander aufgestellten Filtern angebracht ist, mittels deren die unterschiedlichen Verunreinigungskomponenten hintereinander aus der Luft entfernt werden.

EP 0 188 853 A1

Verfahren und Vorrichtung zum Reinigen der aus einen
Kremationsofen abkunftigen Luft.


Die Erfindung betrifft ein Verfahren und eine Vorrichtung
zum Reinigen der aus einen Kremationsofen herkommenden Luft.
Die Luft, wie abkunftig aus einen Kremationsofen ist sehr
stark verunreinigt und muss, ehe in die Umwelt ausgeblasen
zu werden, möglichst viel von den Luftverunreinigende Komponenten befreit werden.
Nach einem bekannten Verfahren wird dazu die Luft, welche von
einem Kremationsofen herkommt, durch einen Nachverbrennungsofen geleitet.
Ein derartiger Nachverbrennungsofen ist sehr kostspielig
und insbesondere dann, wann ein bestehender Kremationsofen
aus Umwelterwägungen mit einen Nachverbrennungsofen ausgerüstet werden muss.
Eine weitere Beschwerde der Reinigung von aus einen Kremationsofen herkommenden Luft durch diese Luft durch einen Nachverbrennungsofen zu führen ist, dass in dem Nachverbrennungsofen die unterschiedlichen Verunreinigungskomponenten nur
oxidiert werden, sodass in der Luft, die vonaus den Nachverbrennungsofen in die Aussenluft ausgeblasen wird, noch
mehrere Umweltverunreinigenden  Komponenten anwesend sind,
wie $SO_2$, $SO_3$, $No_x$, NF und Chlor-Verbindungen, während auch
noch Flugasche dabei in die Aussenluft ausgeblasen wird.
Auch wird der Geruch der in den Nachverbrennungsofen eingeführten Luft nicht genügend mit der Nachverbrennung behoben.

Die Erfindung beabsichtigt diese Beschwerden des bekannten
Verfahrens zu beseitigen.

Das Verfahren nach der Erfindung zeigt dazu das  Merkmal,
dass der Luft wie aus einen Kremationsofen herkommt, geführt
wird durch einen von einem Gehäuse umschlossenen Durchflusskanal, in den eine Kombination von hinter einander aufgestellten
Filtern is angebracht, mittels deren die unterschiedlichen
Verunreinigungskomponenten hintereinander aus die Luft entfernt werden.

Im Gegensatz zum bekannten Verfahren werden mit dem Verfahren und der Vorrichtung nach der Erfindung nahezu alle Umweltverunreinigenden Komponenten aus die zu reinigen Luft entfernt.

In günstiger  Weise wird, nach einem weiteren Merkmal des erfindungsgemässen Verfahrens, die zu reinigen Luft in oder nahe dem Beginn des Durchflusskanals gekühlt. Mit diesem Kühlen werden die nebel- und teerförmigen Komponenten niedergeschlagen, sodass diese die Filtermedia in den aufeinander folgenden Filtern nicht verstopfen können.

Die Vorrichtung für Anwendung des erfindungsgemässen Verfahrens wird gekennzeichnet durch ein Gehäuse mit einer Einfuhr für die zu reinigen Luft und einer Abfuhr für die gereinigte Luft, und wozwischen wenigstens ein Gebläse ist angeordnet für das durch das Gehäuse hindurch Fördern der Luft, während in der Strombahn der Luft im Gehäuse eine Kombination von Filtern ist angebracht, mittels deren die unterschiedlichen Verunreinigungskomponenten aus die Luft entfernt werden können. Die Reihenfolge der Filter in der Kombination ist derart, dass die Filter immer nur jene Verunreinigungskomponenten aus die Luft abscheiden, die das naher Reinigen des Mediums im Filterelement noch ermöglichen.

Bei einer Zweckmässigen Ausführungsform ist in die Kombination von Filtern als erste ein Sandfilter angebracht. Mit diesem Sandfilter können die teerförmigen Verunreinigungselemente in zweckmässiger Weise aus den Luftstrom entfernt werden, sodass diese teerförmigen Verunreinigungselemente nicht in die aufeinanderfolgenden Fliter, welche nach dem Sandfilter geschaltet sind, geraten können. Die teerförmigen Elemente, die in das Sandfilter geraten sind , können dort in einfacher Weise entfernt werden mit dem Abschöpfen der obenen Schicht des Sandes im Filter. Auch kann in zweckmässiger Weise das Sandfilter ausgeführt sein in der Form eines Sandbettes, dass fortwährend in Bewegung gehalten wird und etwaig fortwährend aufgefrischt wird.

Bei einer anderen zweckmässigen Ausführungsform der erfindungsgemässen Vorrichtung umfasst die Kombination wenigstens ein Filter für das aus die durchfliessende Luft Abfangen
der Staubteilchen. Dieses Filter kann in unterschiedlichen
Weisen sein ausgeführt, wie in Form eines elektro-statischen
Entstaubungsfilter, und insbesondere in Form eines Elektretefilter.

Mit dem Sandfilter und dass darauf folgende Entstaubungsfilter werden die feste Verunreinigungselemente in der Luft
hauptsächlich ganz abgefangen. Nach dem Passieren der Luft
vom Filter für das Abfangen der Staubteilchen werden die
Verunreinigungselemente in der Luft hauptsächlich noch geformt durch gasförmige Bestandteile, die Gestank verursachen
können.

Für das Entfernen dieser gasförmigen Verunreinigungskomponenten
ist, nach einem Merkmal der erfindungsgemässen Vorrichtung,
in die Kombination ein aktives Kohlefilter und/oder ein
chemisches Absorbtionsmittelfilter angebracht.
In zweckmässiger Weise kann dieses chemische Absorbtionsmittel
bestehen aus Alumiumoxid, das imprägniert ist mit einer Lösung
von Kaliumpermanganat. Mit diesem Absorbtionsmittel können
gasförmige Verunreinigungselemente, die Gestank verursachen,
oxidiert werden.
Nach dem Passieren des aktiven Kohlefilters und/oder des
chemischen Absorbtionsmittel wird die durchströmende Luft
hauptsächlich staubfrei und gestankfrei sein, d.h., völlig
befreit oder nahezu völlig befreit von festen und gasförmigen
Verunreinigungselementen.

In günstiger Weise kann, nach einem weiteren Merkmal der
erfindungsgemässen Vorrichtung hinter dem aktiven Kohlefilter
oder dem chemischen Absorbtionsmittelfilternoch als letzte,
und vorzugsweise hinter dem Gebläse, ein Mikro-Glassfasernfilter, auch wohl genennt ein Absolutfilter, angebracht sein.
In zweckmässiger Weise kann dieses Mikro-Glassfasernfilter
unmittelbar vor der Abfuhr im Gehäuse sein angeordnetm wodurch
das durch das Gebläe produzierte Geräusch kaum bis ausserhalb
dem Gehäuse durchdringen kann.

0188853

Das Gehäuse kann unterschiedlich gebildet sein. Bei einer zweckmässigen Ausführungsform der erfindungsgemässen Vorrichtung hat das Gehäuse die Form eines langgedehnten Parallelepipedon und worin die Filter hintereinander aufgestellt sind.

Die Filter in der Kombination können in unterschiedlichen Weisen gebildet sein. Bei einer günstigen Ausführungsform der Vorrichting nach der Erfindung sind die Filter teilweise ausgeführt als ein Kammerfilter mit zwei, quer zur Strombahn der Luft verlaufenden, perforierten Wanden, zwischen denen das Filtermedium, wie aktive Kohle oder ein chemisches Absorbtionsmittel, wie mit Kaliumpermanganat imprägniertem Aluminiumoxid, ist angebracht. Bei einer weiteren Ausarbeitung der erfindungsgemässen Vorrichtung ist wenigstens ein Kammerfilter an der Oben- und/oder Unterseite versehen mit einer Förderschnecke mittels der das Filtermedium, wie aktive Kohle oder das mit Kaliumpermanganat imprägnierte Aluminiumoxid in und/oder aus das Kammer geführt kann werden für das wohl oder nicht ununterbrochen Auffrischen der Füllung. Bei einer mehr besonderen Ausführungsform der erfindungsgemässen Vorrichtung umfasst die Kombination ein biologisches Filter.

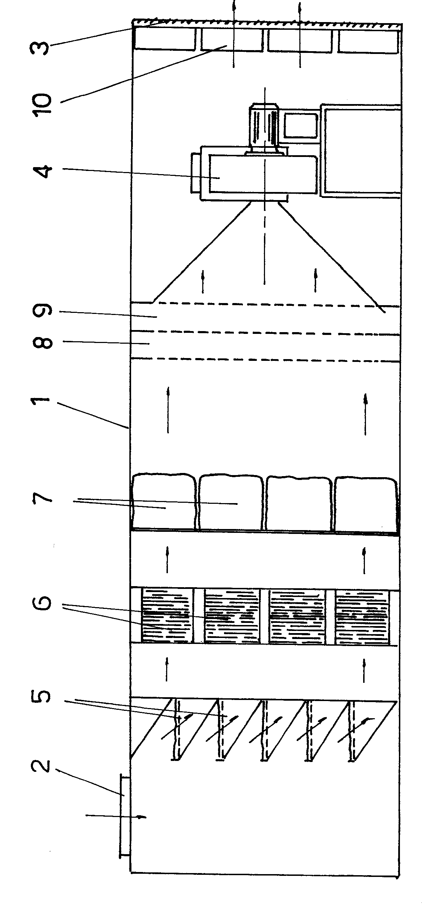

Die Erfindung wird jetzt näher erläutert anhand der Zeichnung eines Ausführungsbeispiels.

Wie in der Zeichnung dargestellt, besteht die Vorrichtung aus einem Gehäuse 1 mit einer Einfuhr für die zu reinigen Luft 2, einer Abfuhr für die gereinigte Luft 3, während zwischen der Einfuhr 2 und der Abfuhr 3 ein Gebläse 4 ist angeordnet.
In der Strombahn der Luft im Gehäuse vanab der Einfuhr 2 nach der Abfuhr 3 sind hintereinander angebracht ein Sandfilter 5 für das Abtrennen der teerförmigen Verunreinigungselemente, ein Luftkühler 6 mittels dessen der sich in der Luft befindliche Wasserdampf kondensiert werden kann um abgeführt zu werden ehe die Luft in das Staubfilter 7 kommt.

Dieses Staubfilter kann die Form haben eines Taschenfilters oder eines elektro-statischen Filters oder eines Elektretefilters.

Hinter dem Staubfilter befinden sich die Kammerfilter 8 und 9 und wobei das Kammerfilter 8 ein chemisches Absorbtionsmittelfilter ist während das Kammerfilter 9 ein aktives Kohlefilter ist.

Hinter dem Kohlefilter ist das Gebläse 4 angeordnet, das die Luft durchführt nach dem Mikro-Glassfasernfilter oder Absolutfilter 10, das unmittelbar vor die Abfuhröffnung im Gehäuse ist angebracht.

0188853

Ansprüche

1. Verfahren zum Reinigen der aus einen Kremationsofen abkommenden Luft, dadurch gekennzeichnet, dass die Luft geführt wird durch einen, von einem Gehäuse umschlossenen Durchflusskanal, in der eine Kombination von hintereinander aufgestellten Filtern ist angebracht, mittels deren die unterschiedlichen Verunreinigungskomponenten hintereinander aus die Luft entfernt werden.

2. Verfahren nach Anspruch 1, dadurch gekennzeichnet, dass die Luft in oder nahe dem Beginn des Durchflusskanals gekühlt wird.

3. Vorrichtung zur Anwendung des Verfahrens nach Anspruch 1 oder 2, gekennzeichnet von einem Gehäuse mit einer Einfuhr für die zu reinigen Luft und einer Abfuhr für die gereinigte Luft, und wozwischen wenigstens ein Gebläse ist angebracht für das durch das Gehäuse hindurch Fördern der Luft, während in der Strombahn der Luft im Gehäuse eine Kombination von Filtern ist angeordnet, mittels deren die unterschiedlichen Verunreinigungskomponenten hintereinander aus die Luft entfernt werden können.

4. Vorrichtung nach Anspruch 3, dadurch gekennzeichnet, dass in der Kombination von Filtern als erste ein Sandfilter und/oder ein wärmebeständiges mechanisches Filter, wie ein Zyklontuchfilter oder ein keramisches Filter ist angebracht.

5. Vorrichtung nach Anspruch 3 oder 4, dadurch gekennzeichnet, dass die Kombination ein Staubfilter, mehr insbesondere ein elektro-statisches Entstaubungsfilter oder ein Elektretefilter, und/oder ein aktives Kohlefilter und/oder ein chemisches Absorbtionsmittelfilter und/oder ein biologisches Filter und/oder ein Mikro-Glassfasernfilter umfasst.

6. Vorrichtung nach Anspruch 5, dadurch gekennzeichnet, dass das Mikro-Glassfasernfilter hinter dem Gebläse und unmittelbar vor der Abfuhr im Gehäuse ist aufgestellt.

0188853

7. Vorrichtung nach einem der vorangehenden Ansprüche, dadurch gekennzeichnet, dass im Gehäuse, mehr insbesondere in oder nahe dem Beginn der Strombahn der Luft ein Kühlelement ist angeordnet.

8. Vorrichtung nach einem der vorangehenden Ansprüche, dadurch gekennzeichnet, dass das Gehäuse die Form hat eines langgedehnten Parallelepipedon, worin die Filter hinter einander sind aufgestellt.

9. Vorrichtung nach einem der vorangehenden Ansprüche, dadurch gekennzeichnet, dass die Filter teilsweise sind ausgeführt als ein Kammerfilter mit zwei, quer zur Strombahn der Luft verlaufenden, perforierten Wanden, zwischen denen das Filtermedium, wie aktive Kohle oder ein chemisches Absorbtionsmittel, wie mit Kaliumpermanganat imprägniertem Aluminiumoxid, ist angebracht.

10. Vorrichtung nach Anspruch 9, dadurch gekennzeichnet, dass das Kammerfilter an der Oben- und/oder Unterseite ist versehen mit einer Förderschnecke, mittels der das Filtermedium in und/oder aus das Kammer geführt werden kann für das wohl oder nicht ununterbrochene Erneuen der Füllung.

0188853

1/1

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 593 090 (W.J. SAYER) <br><br> * Figur 2; Seite 2, rechte Spalte, Zeilen 5-67 * <br><br> --- | 1,3-6, 8 | F 23 G 1/00 <br> B 01 D 46/12 |
| A | US-A-4 175 934 (A. LANG) <br><br> --- | | |
| A | CA-A- 943 873 (R.A. ELDER) <br><br> ----- | | |

| RECHERCHIERTE SACHGEBIETE (Int. Cl.4) |
|---|
| B 01 D 46/00 <br> F 23 G 1/00 |

Der vorliegende Recherchenbericht wurde für alle Patentansprüche erstellt.

| Recherchenort <br> DEN HAAG | Abschlußdatum der Recherche <br> 10-04-1986 | Prüfer <br> BOGAERTS M.L.M. |
|---|---|---|